# EUROPEAN PATENT APPLICATION

(11) **EP 0 800 933 A2**
(43) Date of publication of application: **15.10.1997**
(21) Application number: 96830454.3
(22) Date of filing: 19.08.1996
(51) Int. Cl.: B60B 17/00

(54) **Reduced-wear wheel profile for tramway vehicles**

(30) Priority: 11.04.1996 IT TO960280
(71) Applicant: FIAT FERROVIARIA S.p.A., 10125 Torino (IT)
(72) Inventor: Botto, Daniele, 12084 Mondovi' (Cuneo) (IT)
(74) Representative: Buzzi, Franco

(57) **Abstract**

A reduced-wear wheel profile for tramway vehicles wherein the wheel revolving tread (1) has a variable curvature with double curvature radius, the summit (2b) of the wheel flange (2) has a thickness same as that of the UNI 3332 wheel profile, the wheel fillet (3) between the revolving tread (1) and the wheel flange (2) has a curvature radius of 15 mm; and the transition surface between the revolving tread (1) and the wheel flange (2) is without sharp-cornered points.

## Description

The present invention is directed to a reduced-wear wheel profile for metropolitan tramway vehicles.

Traditionally these tramway wheels comprise a rim having a circumpherential revolving tread filletted to a guiding wheel flange, whose profile is standardized according to UNI 3332 schedule. The revolving tread has a sloped linear profile with a gradient of 1:20, with the fillet between the revolving tread and the guiding flange having a curvature radius of 10 mm, and a relatively wide flange summit. Moreover the flank of the guiding flange is rectilinear with a constant gradient.

This standardized profile involves several drawbacks, mainly consisting of early and rapid wear of the wheel, and also of the related rail. In fact the revolving tread, which as explained is initially linear with a 1:20 gradient, maintains the original shape only for a limited run, of the order of 10.000-15.000 Km. Moreover the shape of the fillet between the revolving tread and the guiding flange is critical, since it frequently involves quite remarkable deformations in the fillet area, which originate a thickening of the flange and a verticalisation of the flange flank on the rail side.

Wear of wheels and rails is a particularly felt problem in the tramway transportation field, since the cost for restoring by re-turning the rim profile and, to a larger extent, for interventions on the line to restore the rails, weight heavily on the budgets of the tramway administrations.

The object of the present invention is to provide an improved reduced-wear wheel profile, allowing to considerably reduce the above mentioned inconveniences of the conventional profiles.

In order to achieve the above object, the present invention provides a reduced-wear wheel profile for tramway vehicles of the type set for at the beginning which, according to claim 1, is essentially characterised in that:
- the revolving tread has a variable curvature with double curvature radius,
- the summit of the wheel flange has a thickness same as that of the UNI 3332 wheel profile,
- the fillet between the revolving tread and the wheel flange has a curvature radius of 15 mm, and
- the transition surface between the revolving tread and the wheel flange is without sharp-cornered points.

Due to this configuration, the wheel profile according to the invention leads to a wear optimisation, firstly ensuring maintenance of the original shape of the revolving tread without appreciable variations even following long runs, of the order of 40.000-50.000 Km. Maintaining a large thickness of the wheel flange enables at the same time to achieve in connection to this aspect the same advantages of the UNI 3332 profile, in terms of a reduced response to plastic deformations deriving from the rail intersection crossings.

The transition between the revolving tread and the wheel flange without sharp-cornered points, i.e. having a gradually decreasing slope gradient (for instance up to a maximum tangent of 83^{º}) enables the flange summit to be maintained sufficiently thick and thus able to bear the stresses induced by the hertzian contact and by the lateral slipping which are generated in correspondence of the rail intersections when the rim revolves on the wheel flange. In such situations the profile according to the invention is coupled to the intersection rail only at the flange summit and, notwithstanding the wide-radius fillet, it does not interfere with the rail.

Additionally the greater curvature radius of the fillet between the revolving tread and the wheel flange allows to reduce risks of a double contact area.

Further specific dimensional parameters of the wheel profile according to the invention are defined, with particular reference to the following disclosure and to the subclaims, in connection with the descriptive equations of the profile section, to the coordinates of the end points of each section, and to the coordinates of the circular arcs and related radiuses.

In the annexed drawings:
figure 1 is a diagrammatic sectioned view showing the reduced-wear wheel profile according to the invention, with the indication of the relevant dimensional parameters thereof, and
figure 2 shows also diagrammatically the comparison between the UNI 3332 wheel profile (depicted in full line) and the wheel profile according to the invention (depicted in dotted lines).

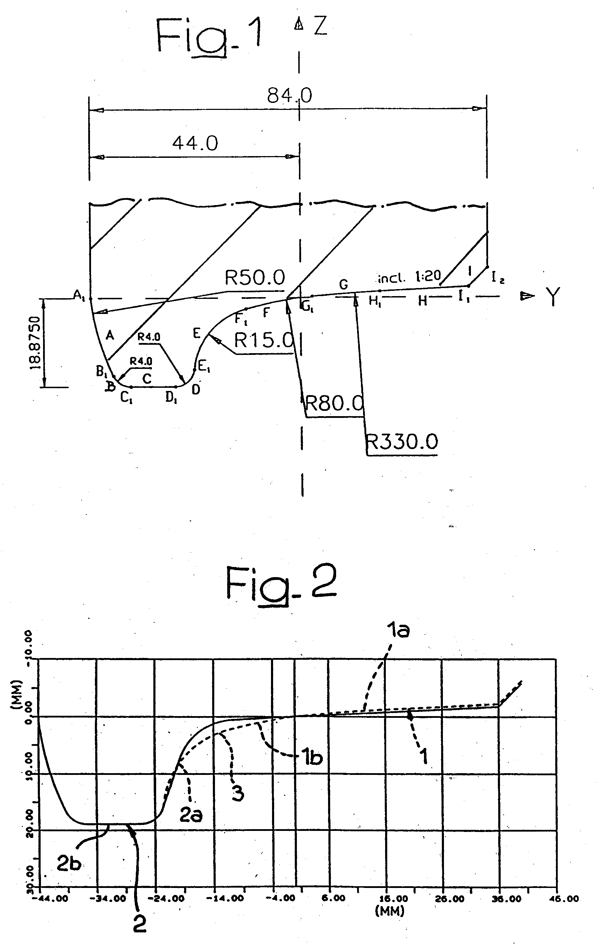

Referring initially to figure 2, the dotted line shows the conceptual differences of the wheel profile according to the invention as compared with the standardized profile according to UNI 3332 schedule, shown in full line. As it is apparent, in the wheel profile according to the invention the wheel revolving tread 1 has, instead of the linear sloped design with a constant 1:20 gradient of the UNI 3332 profile, a variable curvature with two successive sections 1a,1b having a different curvature radius. As indicated in figure 1, the curvature radius of section 1a is about 330 mm, while the curvature radius of section 1b is about 80 mm.

Moreover the fillet 3 between the revolving tread 1 and the guiding wheel flange 2 has a curvature radius of about 15 mm, instead of 10 mm as in the case of the UNI 3332 profile. The transition surface between section 1b of the revolving tread 1 and the wheel flange 2 is without sharp-cornered points, instead of being rectilinear with a constant slope gradient as in the case of the UNI 3332 profile. In practice the flank of the wheel flange 2, indicated as 2a, gradually slopes down up to a maximum tangent of the order of 83^{º}, which enables the summit of the flange itself, indicated as 2b, to be made sufficiently thick, i.e. with a thickness same as that of the UNI 3332 profile. This thickness has proved to be the least responsive to the plastic deformations induced at rail intersection crossings.

Figure 1 shows further dimensional parameters of the wheel profile according to the invention, referred to a nominal revolving radius of 340 mm.

In figure 1 the alphabetic letters further indicate the successive sections of the wheel profile according to the invention (A-I), as well as the end points of each section (A₁-I₂).

The following Tables contain the descriptive equations of the various profile sections (TAB. 1), the coordinates of the end points of each section (TAB. 2), and the coordinates of the centers of the profile circular arcs (TAB. 3).

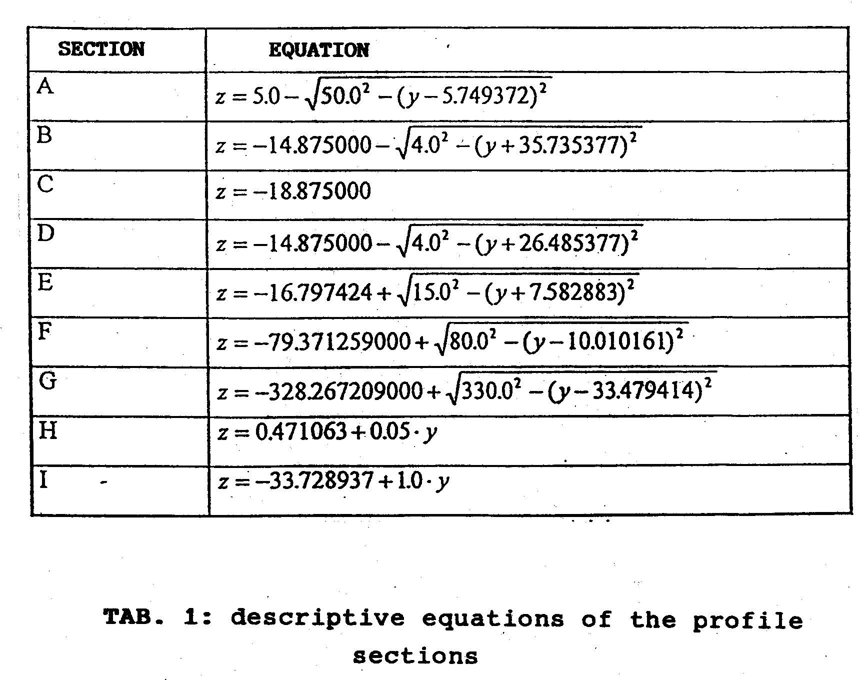

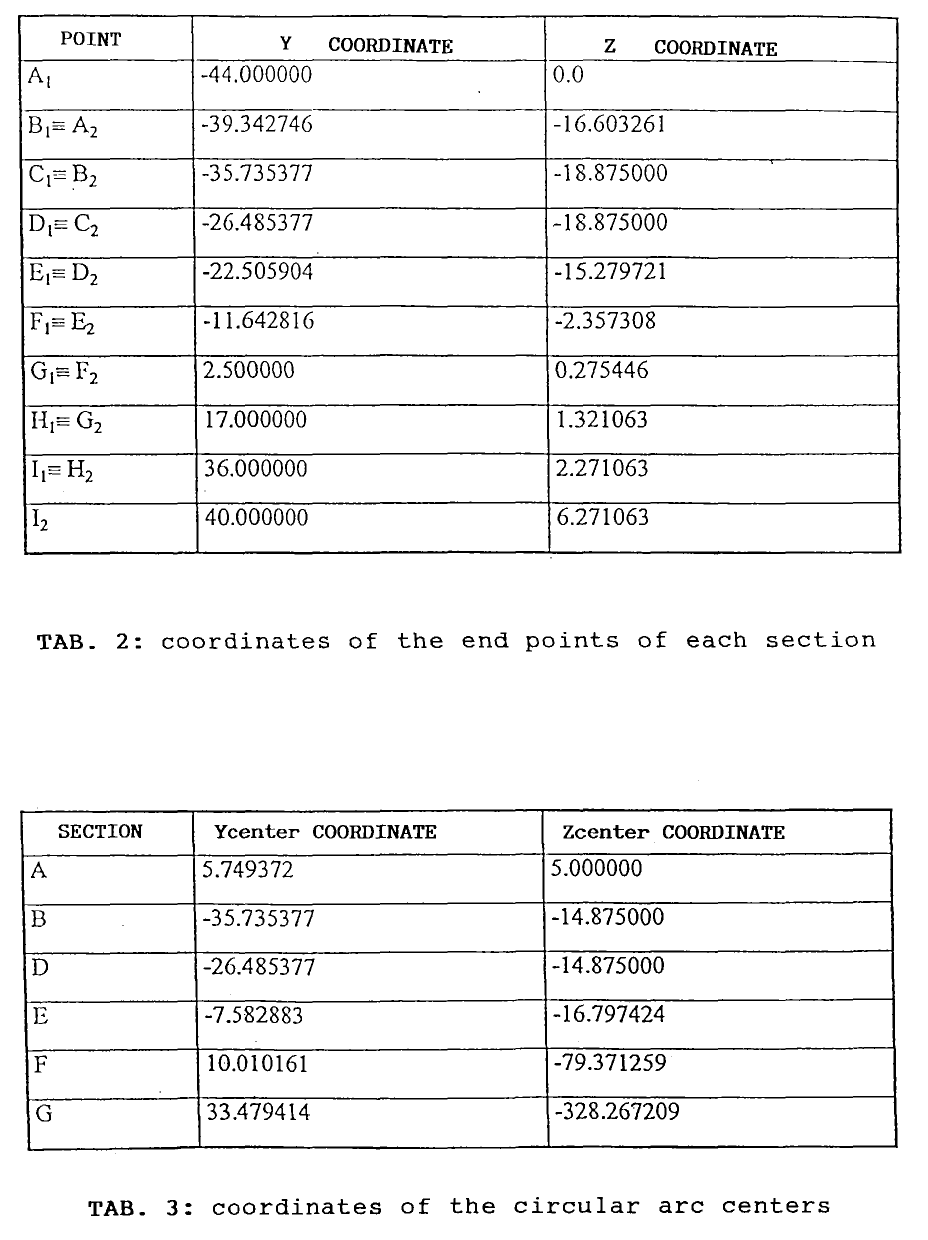

Comparative text carried out by the applicant enabled to verify that the wheel profile according to the invention leads, in comparison with the standardized UNI 3332 profile, to remarkable advantages both in connection to optimization of the wear effect on the revolving tread, and as far as the wheel-rail coupling contact is concerned, particularly with reference to rail intersection crossings, with a consequent reduction of the revolving noise while maintaining substantially the same behaviour as the traditional UNI 3332 profile in connection with the wheel flange deformations.

## Claims

1. Reduced-wear wheel profile for tramway vehicles, of the UNI 3332 type with a rim having a circumpherential revolving tread (1) filletted to a guiding wheel flange (2), characterised in that:
- the revolving tread (1) has a variable curvature with double curvature radius,
- the summit (2b) of the wheel flange (2) has a thickness same as that of the UNI 3332 wheel profile,
- the fillet (3) between the revolving tread (1) and the wheel flange (2) has a curvature radius of 15 mm, and
- the transition surface (2a) between the revolving tread (1) and the wheel flange (2) is without sharp-cornered points.

2. Wheel profile according to claim 1, whose sections are defined as follows: 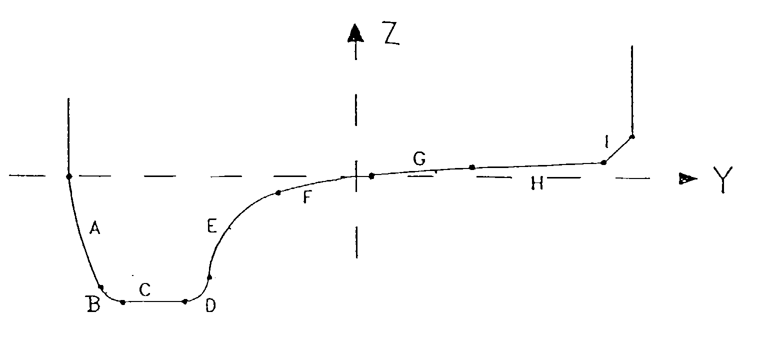 characterised by the following descriptive equations of said profile sections:

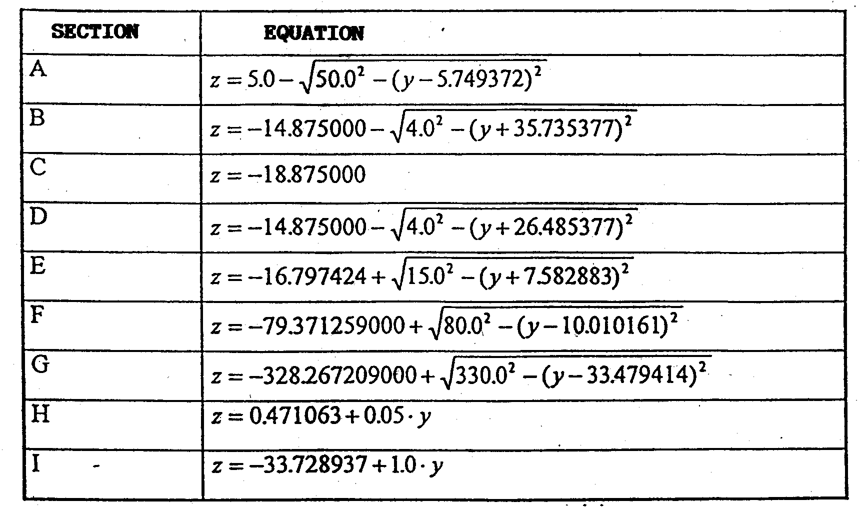

3. Wheel profile according to claim 2, characterised by the following coordinates of the curvature centers of said profile sections:
| SECTION | Ycenter COORDINATE | Zcenter COORDINATE |
|---|---|---|
| A | 5.749372 | 5.000000 |
| B | -35.735377 | -14.875000 |
| D | -26.485377 | -14.875000 |
| E | -7.582883 | -16.797424 |
| F | 10.010161 | -79.371259 |
| G | 33.479414 | -328.267209 |

4. Wheel profile according to any of the preceding claims, whose end points of each section are defined as follows: 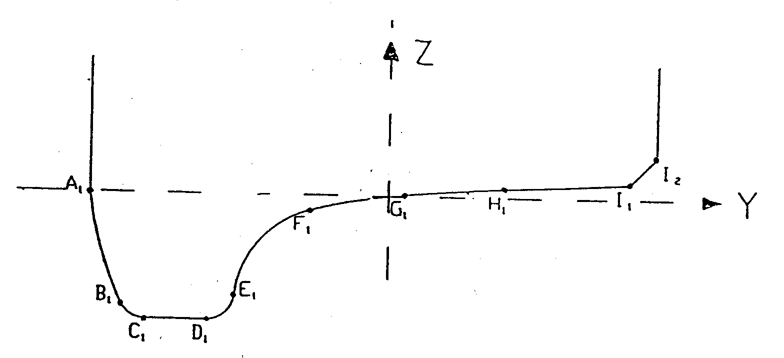 characterised by the following coordinates of said end points:
| POINT | Y COORDINATE | Z COORDINATE |
|---|---|---|
| A₁ | -44.000000 | 0.0 |
| B₁≡A₂ | -39.342746 | -16.603261 |
| C₁≡B₂ | -35.735377 | -18.875000 |
| D₁≡C₂ | -26.485377 | -18.875000 |
| E₁≡D₂ | -22.505904 | -15.279721 |
| F₁≡E₂ | -11.642816 | -2.357308 |
| G₁≡F₂ | 2.500000 | 0.275446 |
| H₁≡G₂ | 17.000000 | 1.321063 |
| I₁≡H₂ | 36.000000 | 2.271063 |
| I₂ | 40.000000 | 6.271063 |
